(19) Europäisches Patentamt
European Patent Office
Office européen des brevets

(11) **EP 4 645 510 A1**

(12) **EUROPEAN PATENT APPLICATION**
published in accordance with Art. 153(4) EPC

(43) Date of publication:
**05.11.2025 Bulletin 2025/45**

(21) Application number: 23911785.6

(22) Date of filing: **15.12.2023**

(51) International Patent Classification (IPC):
*H01M 10/0587* (2010.01)  *H01M 4/134* (2010.01)
*H01M 4/38* (2006.01)  *H01M 10/052* (2010.01)
*H01M 50/449* (2021.01)  *H01M 50/463* (2021.01)

(52) Cooperative Patent Classification (CPC):
**H01M 4/134; H01M 4/38; H01M 10/052;
H01M 10/0587; H01M 50/449; H01M 50/463;**
Y02E 60/10; Y02P 70/50

(86) International application number:
**PCT/JP2023/045078**

(87) International publication number:
**WO 2024/143004 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2022 JP 2022210608**

(71) Applicant: **Panasonic Intellectual Property
Management Co., Ltd.
Kadoma-shi, Osaka 571-0057 (JP)**

(72) Inventors:
• **KONDO, Shinichiro**
  **Kadoma-shi, Osaka 571-0057 (JP)**
• **FUKUOKA, Takahiro**
  **Kadoma-shi, Osaka 571-0057 (JP)**
• **MIYAMAE, Ryohei**
  **Kadoma-shi, Osaka 571-0057 (JP)**
• **KANO, Akira**
  **Kadoma-shi, Osaka 571-0057 (JP)**

(74) Representative: **Novagraaf International SA
Chemin de l'Echo 3
1213 Onex, Geneva (CH)**

(54) **LITHIUM SECONDARY BATTERY AND SEPARATOR**

(57)  A lithium secondary battery includes a positive electrode, a negative electrode facing the positive electrode, a separator disposed between the positive electrode and the negative electrode, and a non-aqueous electrolyte. An electrode group having a plurality of circumferences is constructed by rolling up the positive electrode and the negative electrode with the separator interposed between the positive electrode and the negative electrode. At least one member selected from the group consisting of the positive electrode, the negative electrode, and the separator has a spacer layer. The spacer layer is constituted by a plurality of protrusions such that the spacer layer is not continuous in both a first direction parallel to a rolling up axis and a second direction perpendicular to the first direction. When the electrode group is viewed from a direction of the rolling-up axis, the plurality of protrusions are divided into a plurality of groups, and protrusions included in each group are aligned in the radial direction to form a plurality of radially arranged rows.

FIG. 1

**Description**

[Technical Field]

The present disclosure relates to a lithium secondary battery including a nonaqueous electrolyte having lithium ion conductivity.

[Background Art]

Non-aqueous electrolyte secondary batteries are used in ICT applications such as personal computers and smartphones, in-vehicle applications, power storage applications, and the like. In such applications, non-aqueous electrolyte secondary batteries are required to have a higher capacity. Lithium-ion batteries are known as high-capacity non-aqueous electrolyte secondary batteries. Lithium-ion batteries can reach a high capacity by using, for example, graphite and an alloy active material such as a silicon compound in combination as a negative electrode active material. However, increases in the capacity of lithium-ion batteries are reaching a limit.

Lithium secondary batteries (lithium metal secondary batteries) are promising as non-aqueous electrolyte secondary batteries with high capacities that exceed those of lithium-ion batteries. In a lithium secondary battery, lithium metal is deposited on the negative electrode during charging, and this lithium metal dissolves in the non-aqueous electrolyte during discharging.

PTL 1 proposes providing a spacer (protrusion) between a positive electrode and a separator to ensure a space for deposition of lithium metal during charging, thereby improving charge-discharge efficiency and suppressing cracks in a negative electrode current collector due to the negative electrode being locally expanded. The spacer is disposed between the positive electrode and the separator such that, when a straight line is drawn in a width direction (lateral direction) of the positive electrode current collector, the straight line passes through the spacer at three or more points.

[Citation List]

[Patent Literature]

PTL 1: International Publication No. 2020/0066254

[Summary of Invention]

[Technical Problem]

In PTL 1, a plurality of spacers (protrusions) may be disposed intermittently in a view of a longitudinal direction of the positive electrode current collector. In this case, when an electrode group is constructed by rolling up a positive electrode and a negative electrode with a separator interposed between the positive electrode and the negative electrode, a position (phase) of a protrusion in a circumferential direction may change depending on the number of turns in a cross section of the electrode group perpendicular to a rolling-up axis. In this case, a protrusion on a certain circumference of a turn may be located between protrusions present on an inner or outer circumference relative to the circumference, and the protrusion may enter the space formed between protrusions present on the inner or outer circumference relative to the circumference, reducing the volume of space formed by the protrusions. As a result, the effect of improving cycle characteristics obtained through space formation may not be sufficiently obtained.

[Solution to Problem]

One aspect of the present disclosure relates to a lithium secondary battery including: a positive electrode; a negative electrode facing the positive electrode; a separator disposed between the positive electrode and the negative electrode; and a nonaqueous electrolyte, wherein an electrode group having a plurality of circumferences is constructed by rolling up the positive electrode and the negative electrode with the separator interposed between the positive electrode and the negative electrode, the positive electrode, the negative electrode, and the separator have an elongate shape having a length L1 in a first direction D1 parallel to a rolling-up axis and a length L2 in a second direction D2 perpendicular to the first direction (L1 < L2), at the negative electrode, lithium metal is deposited during charging and the lithium metal dissolves during discharging, at least one member selected from the group consisting of the positive electrode, the negative electrode, and the separator has a spacer layer, the spacer layer is constituted by a plurality of protrusions such that the spacer layer is not continuous in both the first direction and the second direction, and the plurality of protrusions are divided into a plurality of groups, and the protrusions included in each group are aligned in a radial direction to form a plurality of radially arranged rows, when the electrode group is viewed from a direction of the rolling-up axis.

Another aspect of the present disclosure relates to a separator having an elongate shape having a length L1 in a first direction D1 and a length L2 in a second direction D2 perpendicular to the first direction (L1 < L2), the separator including: a base material layer; and a spacer layer, wherein the spacer layer is constituted by a plurality of protrusions such that the spacer layer is not continuous in both the first direction and the second direction, and when an electrode group having a plurality of circumferences and a rolling-up axis parallel to the first direction is constructed by rolling up a positive electrode and a negative electrode with the separator interposed between the positive electrode and the negative electrode, the plurality of protrusions are divided into a plurality of groups, and the protrusions included in each group are aligned in a radial direction to form a plurality of radially arranged rows, when the electrode group is viewed from a direction of the rolling-up axis.

[Advantageous Effects of Invention]

According to the present disclosure, it is possible to suppress deterioration of cycle characteristics of a lithium secondary battery.

Novel features of the present invention are set forth in the appended claims, but the present invention, both in terms of structure and content, together with other objects and features of the present invention, will be better understood from the following detailed description taken in conjunction with the drawings.

[Brief Description of Drawings]

FIG. 1 is a plan view schematically showing an example of an arrangement of a spacer layer provided on a surface of a separator in a lithium secondary battery according to an embodiment of the present disclosure.
FIG. 2A is a conceptual diagram showing a state of a cross section perpendicular to a rolling-up axis when an electrode group is constructed using the separator shown in FIG. 1.
FIG. 2B is a conceptual diagram showing a state of a cross section perpendicular to a rolling-up axis when an electrode group is constructed using the separator shown in FIG. 1.
FIG. 3 is a plan view schematically showing another example of the arrangement of a spacer layer provided on a surface of the separator.
FIG. 4 is a plan view schematically showing still another example of the arrangement of the spacer layer provided on a surface of the separator.
FIG. 5 is a longitudinal cross-sectional view schematically showing a lithium secondary battery according to an embodiment of the present disclosure.
FIG. 6 is an enlarged view schematically showing a main portion of the lithium secondary battery shown in FIG. 5.

[Description of Embodiments]

Hereinafter, embodiments of the present disclosure will be described by way of examples, but the present disclosure is not limited to the examples described below. In the following description, specific numeric values, materials, and the like may be given as examples, but other numeric values, materials, and the like may also be applied as long as effects of the present disclosure can be obtained. Note that constituent elements of known secondary batteries may be applied to constituent elements other than portions that are characteristic of the present disclosure. In this specification, the expression "numeric value A to numeric value B" includes numeric value A and numeric value B, and can be read as "numeric value A or more and numeric value B or less". In the following description, when a lower limit and an upper limit are given as examples of numeric values regarding specific physical properties, conditions, and the like, any of the exemplified lower limits can be combined with any of the exemplified upper limits in any combination, as long as the lower limit is not greater than or equal to the upper limit. When a plurality of materials are mentioned as examples, one of them may be selected and used alone, or two or more of them may be used in combination.

Also, the present disclosure encompasses combinations of items respectively recited in two or more claims selected from the attached claims. That is to say, it is possible to combine items respectively recited in two or more claims selected from the attached claims, as long as no technical contradiction arises.

A lithium secondary battery according to an embodiment of the present disclosure includes a positive electrode, a negative electrode facing the positive electrode, a separator disposed between the positive electrode and the negative electrode, and a non-aqueous electrolyte. An electrode group having a plurality of circumferences is constructed by rolling up the positive electrode and the negative electrode with the separator interposed between the positive electrode and the negative electrode. The positive electrode, the negative electrode, and the separator have an elongate shape having a length L1 in a first direction D1 parallel to a rolling-up axis and a length L2 in a second direction D2 perpendicular to the first direction, and the length L1 is shorter than the length L2 (L1 < L2). The lithium secondary battery is of a type of a secondary battery in which lithium metal is deposited on the negative electrode during charging and the lithium metal dissolves from the negative electrode during discharging. Hereinafter, the positive electrode and the negative electrode may be collectively referred to as "electrodes".

In the lithium secondary battery, for example, 70% or more of the rated capacity is realized by deposition and dissolution of lithium metal. The movement of electrons at the negative electrode during charging and discharging is primarily due to the deposition and dissolution of lithium metal at the negative electrode. Specifically, 70% to 100% (e.g., 80% to 100% or 90% to 100%) of the movement of electrons (or, from another perspective, current) at the negative electrode during charging and discharging is due to the deposition and dissolution of lithium metal. That is, the negative electrode of the lithium secondary battery differs from a negative electrode in which the movement of electrons in the negative electrode during charging and discharging is mainly due to the absorption and release of lithium ions by the negative electrode active material (such as graphite).

At least one member selected from the group consisting of the positive electrode, the negative electrode, and the separator has a spacer layer. The spacer layer forms a space between the positive electrode and the separator or between the negative electrode and the separator, and suppresses expansion of the negative electrode due to the battery being charged and discharged.

(Spacer Layer)

The spacer layer ensures the space for deposition of lithium metal on the surface of the negative electrode, and reduces a change in the volume of the negative electrode caused by deposition of lithium metal. The spacer layer is provided as protrusions on at least one of the positive electrode, the negative electrode, and the separator. The spacer layer or the protrusions may be provided on a surface of the positive electrode, may be provided on a surface of the negative electrode, or may be provided on a surface of the separator facing the positive electrode or the negative electrode. The protrusions provided on the surface of the positive electrode and/or the surface of the separator facing the positive electrode form the space between the positive electrode and the separator, and the protrusions provided on the surface of the negative electrode and/or the surface of the separator facing the negative electrode forms the space between the negative electrode and the separator. The space suppresses expansion of the negative electrode accompanying charging and discharging of the battery and suppresses deterioration of cycle characteristics.

The spacer layer can be constituted by a plurality of protrusions such that the spacer layer is not continuous in both the first direction and the second direction. An electrolyte solution can circulate through gaps between a plurality of protrusions, which improves circulation of the electrolyte solution and further suppresses deterioration of cycle characteristics.

Furthermore, in a given cross section perpendicular to the rolling-up axis of the electrode group, cross sections of the protrusions belonging to different circumferences are aligned in the radial direction to form a plurality of radially arranged rows. In an embodiment including a plurality of protrusions, the plurality of protrusions are arranged in a plurality of groups (protrusion groups) when the electrode group is viewed from the direction of the rolling-up axis. The protrusions included in each protrusion group are aligned in the radial direction to form a plurality of radially arranged rows.

In this case, there is no other protrusion between protrusion groups forming rows in the radial direction, and thus protrusions present on a given circumference of a turn will not be located between protrusions present on an inner circumference or an outer circumference relative to the given circumference. This inhibits the protrusions from entering the space formed between protrusions present on the inner circumference or the outer circumference relative to the given circumference, and thus suppresses a reduction of the volume of the space formed by the protrusions. As a result, it is possible to sufficiently improve the effect of suppressing deterioration of cycle characteristics.

The plurality of protrusions belonging to the same protrusion group at least partially overlap in the second direction in a cross section perpendicular to the rolling-up axis of the electrode group, forming a row in the radial direction. It is preferable that, when the electrode group is viewed from the direction of the rolling-up axis, protrusions that are included in the same group and are present on adjacent circumferences overlap each other by 50% or more in length in the second direction.

In addition, it is preferable that all of the protrusions belonging to the same protrusion group have a common overlapping portion in the second direction, when the electrode group is viewed from the direction of the rolling-up axis. It is more preferable that a straight line passing through a center of a specific protrusion in the second direction and extending in the radial direction passes through all of the protrusions included in the same protrusion group, when the electrode group is viewed from the direction of the rolling-up axis.

In this case, since the circumferential length of a circumference increases toward a circumference on the outer circumferential side in the electrode group, the length or the width of a given protrusion in the second direction may be smaller than or equal to the length or the width of a protrusion in the second direction disposed closer to the outer circumferential side such that protrusions on adjacent circumferences surely overlap each other. Here, among the protrusions disposed closer to the outer circumferential side, a plurality of protrusions belonging to different protrusion groups may be present. The length or the width of the protrusion in the second direction may be smaller than or equal to the length or the width of a protrusion in the second direction that belongs to at least the same protrusion group and is disposed closer to the outer circumferential side. The length or the width of a plurality of protrusions (belonging to the same protrusion group) in the second direction may gradually increase from the inner circumferential side toward the outer circumferential side.

Here, the width of the protrusion in the second direction means, when the protrusion does not have a straight shape parallel to the second direction, a difference between a position in the second direction located closest to one side (the inner circumferential side of a turn) in the second direction within the protrusion and a position in the second direction located closest to the other side (the outer circumferential side of the turn) in the second direction within the protrusion. Similarly, the width of a protrusion in the first direction means the difference between the position in the first direction located closest to one side in the first direction within the protrusion and the position in the first direction located closest to the other side in the first direction within the protrusion. When the protrusion has a straight shape that is parallel to the second direction, the width of the protrusion in the second direction is equal to the length of the protrusion in the second direction.

For a given circumference in the electrode group, the diameter of a circle approximating the circumference is denoted by D. A total thickness of the positive electrode, the negative electrode, and two separators, and the spacer layer is denoted by T. The thickness of the positive electrode, the negative electrode, and the separators is the thickness of a base portion without considering the spacer layer. In this case, in a cross section perpendicular to the rolling-up axis of the electrode group, the length of a protrusion on the given circumference in the second direction is denoted by $L_i$. The length of a protrusion in the second direction that belongs to the same protrusion group and is present on a circumference that is adjacent to the given circumference and closer to the outer circumferential side is denoted by $L_o$. Considering a cross section of the electrode group perpendicular to the rolling-up axis, when an angle occupied by the protrusions on the given circumference in the circumferential direction is denoted by $\theta_i$ (rad), $L_i = (D/2) \times \theta_i$ holds true. Similarly, when an angle occupied by the protrusions on the circumference that is adjacent to the given circumference and closer to the outer circumferential side is denoted by $\theta_o$, $L_o = ((D + 2T)/2) \times \theta_o$ holds true.

From the viewpoint of ensuring that protrusions on adjacent circumferences overlap each other and ensuring a sufficient space, it is preferable that $\theta_i = \theta_o$ holds true. In this case, $L_i$ and $L_o$ satisfy the following formula.

$$L_o = L_i \times (D + 2T)/D$$

By arranging protrusions on the surface of the member to satisfy the above formula, the space for the deposition of lithium metal can be reliably ensured, and deterioration of cycle characteristics can be suppressed.

Here, the circumference that is adjacent to the given circumference and closer to the outer circumference side refers to a circumference corresponding to the (n + 1)th circumference when the given circumference corresponds to the nth circumference obtained by rolling up the positive electrode, the negative electrode, and the separator. The circumference that is adjacent to the given circumference and closer to the inner circumferential side refers to a circumference corresponding to the (n - 1)th circumference when the given circumference corresponds to the nth circumference obtained by rolling up the positive electrode, the negative electrode, and the separator.

A given cross section of the electrode group that is perpendicular to the rolling-up axis is considered. A central position of a protrusion in a cross section on the given circumference is denoted by P, and a central position of a protrusion that belongs to the same protrusion group, and is present on a circumference that is adjacent to the given circumference and closer to the outer circumferential side, is denoted by $P_o$. Similarly, a central position of a protrusion that belongs to the same protrusion group as the protrusion having the point P, on a circumference that is adjacent to the given circumference and is closer to the inner circumferential side, is denoted by $P_i$. A distance $C_i$ in the second direction between P and $P_i$ in a member prior to a rolled state is determined by substituting D/2 for the distance from the position P to the center of a turn and $\theta_i = 2\pi$ in the $L_i$ formula above. Similarly, a distance $C_o$ in the second direction between P and $P_o$ is determined by substituting $\theta_o = 2\pi$ in the $L_o$ formula above. Therefore, the distances $C_i$ and $C_o$ substantially satisfy a relationship $C_o - C_i = 2\pi T$.

Therefore, when the electrode group is constructed by arranging, on a member, a protrusion group constituted by a plurality of protrusions while increasing a center-to-center distance between protrusions belonging to the same protrusion group by $2\pi T$ at a time along the second direction, protrusions belonging to the same protrusion group are aligned in the radial direction, and can form a radially arranged row.

It is preferable that, when the electrode group is viewed from the direction of the rolling-up axis, a plurality of protrusions (belonging to different protrusion groups) are evenly distributed on all of the circumferences. It is preferable that, on a given cross section that is perpendicular to the rolling-up axis of the electrode group and crosses protrusions, the proportion of the crossed protrusions present thereon (presence proportion) is substantially equal on all of the circumferences. The presence proportion of the crossed protrusions is a value obtained by dividing, by a circumferential length, the length of a protrusion in the second direction that is present on a circumference (the total length when there are a plurality of protrusions on the same circumference). The expression "presence proportion of the protrusions is substantially equal to that on all of the circumferences" means that, when the presence proportion is calculated for all of the circumferences using the above method, the ratio of the difference between the maximum and minimum values of the presence proportion to the maximum value of the presence proportion is 10% or less. This reduces the unevenness of the spaces for deposition of lithium metal, improving cycle characteristics.

In addition, when a virtual line parallel to the first direction is drawn at a given position on the member provided with the spacer layer, the virtual line preferably passes through the spacer layer at two or more points. In this case, since two protrusions facing each other in the first direction are present at the given position in the second direction, a space for deposition of lithium metal can be reliably ensured. On the other hand, if a virtual line parallel to the first direction at a given position in the second direction does not pass through the spacer layer or passes through the spacer layer at only one point, the space in a surrounding region of the virtual line may be crushed due to an increase in the internal pressure of the electrode group caused by the deposition of lithium metal, and sufficient space may not be ensured. When the virtual line passes through the spacer layer at two or more points at the given position in the second direction, the space for deposition of lithium metal can be more reliably ensured, and deterioration of cycle characteristics can be suppressed.

From the viewpoint of ensuring the space for deposition of the lithium metal, on a given cross section that is perpendicular to the rolling-up axis of the electrode group and crosses protrusions, there may be two or more regions where no protrusions are present.

When a virtual line is drawn from a point on a given protrusion along the second direction, a length Ly by which the virtual line crosses protrusions and a length Ln by which the virtual line does not cross protrusions may satisfy $0.1 \leq Ln/(Ly + Ln) \leq 0.75$. In this case, it is possible to ensure a space for the deposition of lithium metal and to ensure good liquid circulation, making it possible to realize improved cycle characteristics.

The plurality of protrusions may be line-shaped protrusions. The plurality of protrusions may be line-shaped protrusions parallel to the second direction. Each line-shaped protrusion may be a linear protrusion, a curved protrusion, or a protrusion that includes a linear portion and a curved portion.

The plurality of protrusions may be arranged in a staggered manner. A polygonal (e.g., hexagonal) mesh may be constituted by a plurality of linear protrusions. From the viewpoint of inhibiting the space between the negative electrode and the separator from becoming uneven, the interior angle of the polygon may be 120° or less.

From the viewpoint of ensuring the minimum necessary space between the negative electrode and the separator, an average height h of the protrusions may be 0.02 mm or more and 0.09 mm or less, or 0.015 mm or more and 0.01 mm or less, depending on the battery size. The average height h of the protrusions is determined by averaging values measured at any ten points.

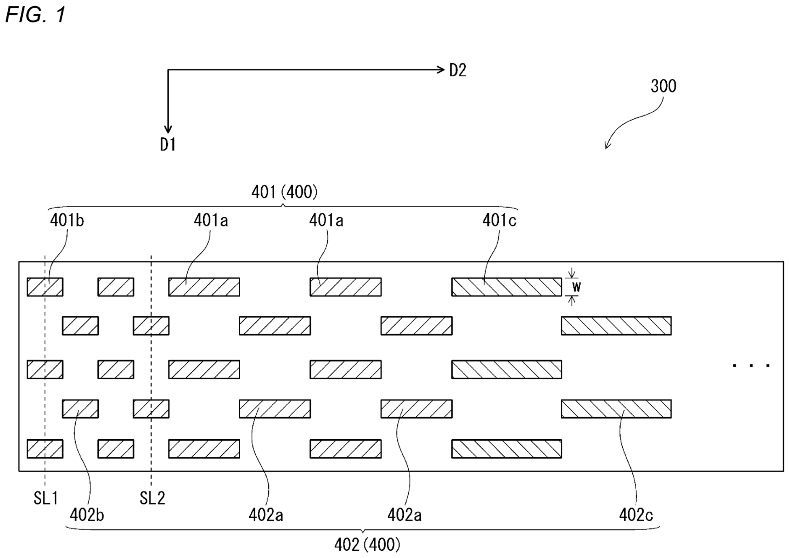

From the viewpoint of improving the circulation of the nonaqueous electrolyte on the surface of the negative electrode, the height of some of the protrusions may be different from the height of the remaining protrusions, and the heights of protrusions that are adjacent to each other may be different from each other. The plurality of protrusions may include a protrusion with a height h1 and a protrusion with a height h2 that is smaller than the height h1. In this case, a ratio h2/h1 of the height h2 to the height h1 may be, for example, 0.8 or more and less than 1.0, or 0.8 or more and 0.95 or less. The width of the protrusion (e.g., a width W of a line-shaped protrusion 401 in FIG. 1) is, for example, 1 mm or less, and 0.1 mm or more and 1 mm or less.

From the viewpoint of suppressing deposition of lithium metal on the surfaces of the protrusions, a plurality of protrusions may be made of a material having lower conductivity than the electrodes, or may be made of a resin material.

There is no particular limitation on a material for constituting the spacer layer. The spacer layer may be made of a conductive material and/or an insulating material. In particular, an insulating material is preferable. Because lithium metal is less likely to be deposited on the surface of an insulating material, the effect of suppressing expansion of the negative electrode can be enhanced.

The conductive material can be selected as appropriate from materials described below as materials for the negative electrode current collector or the positive electrode current collector. Such a spacer layer may be provided by forming protrusions on the negative electrode current collector through pressing or the like. In addition, a conductive paint may be applied to a surface of the separator or an electrode, or a piece of conductive tape may be attached to a surface of the separator or the electrode.

The insulating material may be a resin material, for example. Examples of the resin material include polyolefin resin, acrylic resin, polyamide resin, polyimide resin, silicone resin, fluorine-based resin, urethane resin, melamine resin, and urea resin. A product obtained by curing a curable resin such as an epoxy resin may be used as the resin material. In addition, these resin materials may be mixed with inorganic fillers or the like.

A material for constituting the spacer layer is desirably a material having a Young's modulus of 0.01 GPa or more and 10 GPa or less. This makes it possible to easily alleviate stress caused by the expansion and contraction of the negative electrode, and easily maintain a space for accommodating lithium metal. In addition, damage to electrodes caused by the spacer layer can be easily suppressed. Examples of insulating materials having a Young's modulus in the above range include products obtained by curing the above curable resin.

The spacer layer can be formed by, for example, attaching a piece of resin adhesive tape to the surface of a separator or an electrode. Also, the spacer layer may be formed by applying a solution or dispersion containing a resin material to the surface of the separator or the electrode and drying the solution or dispersion. The spacer layer may be formed by applying a curable resin to the surface of the separator or the electrode in a desired shape and curing the curable resin. Alternatively, the spacer layer may be formed by spraying resin particles to the surface of the separator or the electrode in a desired shape.

The spacer layers can be provided on surfaces on both sides of a member. In this case, the spacer layer includes a first spacer layer disposed on a first surface of a member, and a second spacer layer disposed on a second surface of a member. When the protrusion formed by the first spacer layer and the protrusion formed by the second spacer layer each satisfy the above-mentioned relationship, a space for deposition of lithium metal can be reliably ensured, and deterioration of cycle characteristics can be suppressed.

The lithium secondary battery may include a stacked-type electrode group constructed by stacking the positive electrode and the negative electrode with the separator interposed between the positive electrode and the negative electrode, or may include a rolled-up type electrode group constructed by spirally rolling up the positive electrode and the negative electrode with the separator interposed therebetween.

The separator according to an embodiment of the present disclosure relates to a separator provided with the above spacer layer. The separator has an elongate shape having a length L1 in a first direction D1, and a length L2 in a second direction D2 perpendicular to the first direction (L1 < L2), and has a base material layer and a spacer layer. The spacer layer is constituted by a plurality of protrusions such that the spacer layer is not continuous in both the first direction and the second direction. When the positive electrode and the negative electrode are rolled up with the separator interposed between the positive electrode and the negative electrode to construct an electrode group having a plurality of circumferences and having the rolling-up axis parallel to the first direction, the plurality of protrusions are divided into a plurality of groups, and the protrusions included in each group are aligned in the radial direction to form a plurality of radially arranged rows, when the electrode group is viewed from a direction of the rolling-up axis. When a virtual line parallel to the first direction is drawn at any position on the separator, the virtual line preferably passes through the spacer layer at two or more points.

Hereinafter, an arrangement of the spacer layer will be described with reference to the drawings. In the illustrated example, the spacer layer is provided on the surface of the separator. However, embodiments of the present disclosure are not limited to this, and the spacer layer may be provided on a surface of an electrode.

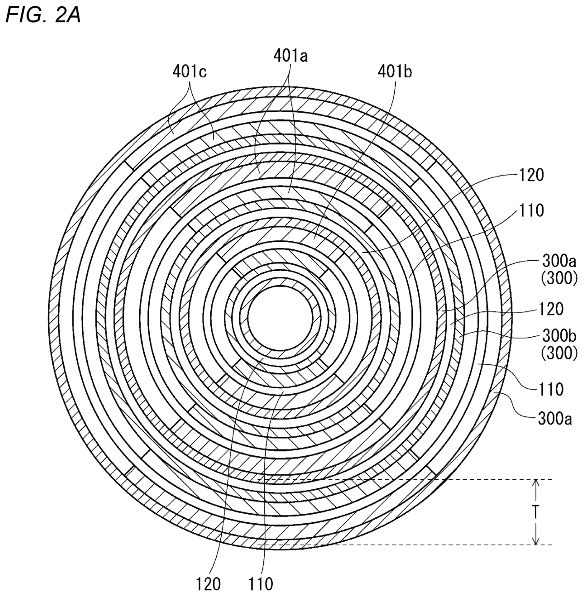

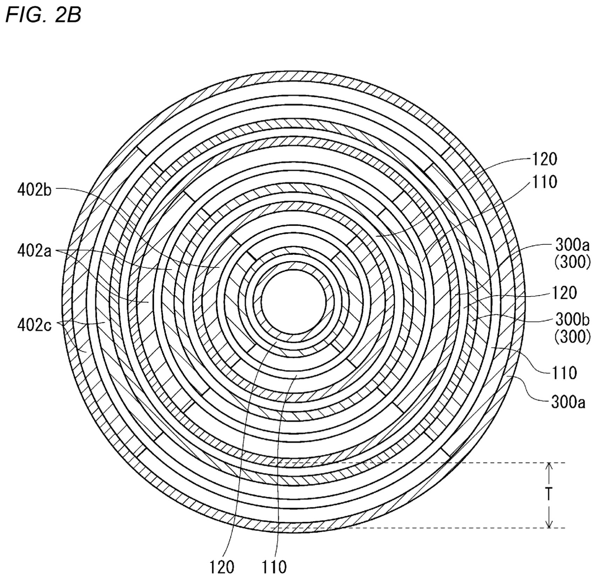

FIG. 1 is a plan view schematically showing the spacer layer arranged on the surface of the separator. FIGS. 2A and 2B are conceptual diagrams schematically showing a state of a cross section perpendicular to the rolling-up axis when an electrode group is constructed by rolling up a separator 300 shown in FIG. 1 together with the positive electrode and the negative electrode.

In the example shown in FIG. 1, a spacer layer 400 is constituted by a plurality of line-shaped protrusions that extend substantially parallel to each other along the second direction D2. Note that the expression "substantially parallel" means roughly parallel, and line-shaped protrusions may intersect at an angle of, for example, 0° to 20°, or 0° to 10°.

More specifically, the spacer layer 400 includes a plurality of line-shaped protrusions 401 and 402 that extend along the second direction D2. Each line-shaped protrusion 402 is located at a position different from positions of the line-shaped protrusions 401 in the first direction D1 and the second direction. In a view of the first direction D1, each line-shaped protrusion 401 extends along the second direction D2 at a position in the first direction D1 between adjacent line-shaped protrusions 402, and the line-shaped protrusion 402 extends along the second direction D2 at a position in the first direction D1 between adjacent line-shaped protrusions 401. In a view of the second direction D2, the line-shaped protrusions 402 are arranged in a region in the second direction D2, the region being an intermittent portion where no line-shaped protrusion 401 is arranged, and the line-shaped protrusions 401 are arranged in a region in the second direction D2, the region being an intermittent portion where no line-shaped protrusion 402 is arranged. That is, the plurality of line-shaped protrusions 401 and 402 are arranged on the surface of the separator 300 in a staggered manner as a whole.

Therefore, when a straight line parallel to the first direction D1 is drawn at any position of the separator 300, the straight line passes through the line-shaped protrusions 401 at three points (dashed lines SL1 in FIG. 1) or passes through the line-shaped protrusion 402 at two points (dashed lines SL2 in FIG. 1).

The plurality of line-shaped protrusions 401 are disposed such that their lengths (width in the second direction) become longer toward the outer circumferential side of a turn in the second direction D2, and the distance (center-to-center distance) between protrusions that are adjacent to each other in the second direction becomes longer. In the example shown in FIG. 1, the plurality of line-shaped protrusions 401 include a plurality of line-shaped protrusions 401a, a plurality of line-shaped protrusions 401b located on the inner circumferential side of a turn relative to the line-shaped protrusions 401a, and a plurality of line-shaped protrusions 401c located on the outer circumferential side of a turn relative to the line-shaped protrusions 401a. The width of the line-shaped protrusions 401a in the second direction D2 is larger than the width of the line-shaped protrusions 401b in the second direction D2, and smaller than the width of the line-shaped protrusions 401c in the second direction D2. In addition, the distance (center-to-center distance) between line-shaped protrusions 401a that are adjacent to each other in the second direction is longer than the distance between line-shaped protrusions 401b that are adjacent to each other in the second direction, and shorter than the distance (center-to-center distance) between line-shaped protrusions 401c that are adjacent to each other in the second direction.

Similarly, in the example shown in FIG. 1, the plurality of line-shaped protrusions 402 include a plurality of line-shaped protrusions 402a, a plurality of line-shaped protrusions 402b located on the inner circumferential side of a turn relative to the line-shaped protrusions 402a, and a plurality of line-shaped protrusions 402c located on the outer circumferential side of a turn relative to the line-shaped protrusions 402a. The width of the line-shaped protrusions 402a in the second direction D2 is larger than the width of the line-shaped protrusions 402b in the second direction D2, and smaller than the width of the line-shaped protrusions 402c in the second direction D2. In addition, the distance (center-to-center distance) between line-shaped protrusions 402a that are adjacent to each other in the second direction is longer than the distance between line-shaped protrusions 402b that are adjacent to each other in the second direction, and shorter than the distance (center-to-center distance) between line-shaped protrusions 402c that are adjacent to each other in the second direction.

When the electrode group is constructed by forming the width and the arrangement interval of the line-shaped protrusions 401 and 402 in the second direction D2 such that the width and the arrangement interval gradually increase toward the outer circumferential side of a turn in this manner, the line-shaped protrusions 401 (401a, 401b, 401c) are aligned in the radial direction to form radial rows, and the line-shaped protrusions 402 (402a, 402b, 402c) are aligned in the radial direction to form radial rows.

The line-shaped protrusions 401a, 401b, and 401c can satisfy the above-mentioned formula $Lo = Li \times (D + 2T)/D$, when $Lo$ is the length of the line-shaped protrusion 401a and $Li$ is the length of the line-shaped protrusion 401b. In addition, the line-shaped protrusions 401a, 401b, and 401c can satisfy the above formula $Lo = Li \times (D + 2T)/D$, when $Lo$ is the length of the line-shaped protrusion 401c and $Li$ is the length of the line-shaped protrusion 401a. Similarly, the line-shaped protrusions 402a, 402b, and 402c can satisfy the above formula $Lo = Li \times (D + 2T)/D$, when $Lo$ is the length of the line-shaped protrusion 402a and $Li$ is the length of the line-shaped protrusion 402b. In addition, the line-shaped protrusions 402a, 402b, and 402c can satisfy the above formula $Lo = Li \times (D + 2T)/D$, when $Lo$ is the length of the line-shaped protrusion 402c and $Li$ is the length of the line-shaped protrusion 402a.

FIGS. 2A and 2B are conceptual diagrams showing a state of a cross section perpendicular to the rolling-up axis when an electrode group is constructed using two separators 300 shown in FIG. 1. FIG. 2A is a cross-sectional view taken along a cross section that crosses the line-shaped protrusions 401, and FIG. 2B is a cross-sectional view taken along a cross section that crosses the line-shaped protrusions 402. Note that, although the separators 300, the positive electrode 110, and the negative electrode 120 are depicted as being concentric in FIGS. 2A and 2B, but in reality they are spirally shaped.

The spacer layer is provided on one side of each of the two separators 300a and 300b, which are each constituted by the separator 300 shown in FIG. 1. The separator 300a faces one surface of the positive electrode 110 via the spacer layer provided on the separator 300a, and the separator 300b faces the other surface of the positive electrode 110 via the spacer layer provided in the separator 300b.

In FIG. 2A, the line-shaped protrusions 401 are aligned in the radial direction to form two rows in the radial direction. The two rows in the radial direction are arranged at equiangular positions on the circumference (i.e., at positions shifted by a circumferential angle of 180°) to form radial rows. Similarly, in FIG. 2B, the line-shaped protrusions 402 are aligned in the radial direction to form two rows in the radial direction. The two rows in the radial direction are arranged at equiangular positions on the circumference (i.e., at positions shifted by a circumferential angle of 180°) to form radial rows. The rows in the radial direction formed by the line-shaped protrusions 402 are present at positions between rows in the radial direction formed by the line-shaped protrusions 401 (i.e., at positions shifted by 90° with respect to the line-shaped protrusions 401). Therefore, the electrode group has four rows in the radial direction formed by a plurality of protrusions (protrusion group). However, the present disclosure is not limited to the number of rows in the radial direction.

In the examples shown in FIGS. 2A and 2B, each circumference has two regions where the line-shaped protrusions 401 or 402 are not interposed in the cross section. In other words, on each circumference of the cross section, the space for deposition of lithium metal is divided into two by the line-shaped protrusions 401 or 402. On each circumference of the cross section, the proportion of the regions where the line-shaped protrusions 401 or 402 are interposed is approximately 50%, which is approximately equal, on all of the circumferences.

In FIG. 2A, the length of the line-shaped protrusions 401 (401a, 401b, 401c) in the second direction increases toward a protrusion located on the outer circumferential side. As a result, the line-shaped protrusions 401c overlap, in the circumferential direction, at least some of the line-shaped protrusions 401a that are provided on the same separator, belong to the same radial row, and are positioned closer to the inner circumferential side (preferably 50% or more of the length of the line-shaped protrusions 401a in the second direction), and cover the line-shaped protrusions 401a. The line-shaped protrusions 401a overlap, in the circumferential direction, at least some of the line-shaped protrusions 401b that are provided on the same separator, belong to the same radial row, and are positioned closer to the inner circumferential side (preferably 50% or more of the length of the line-shaped protrusions 401b in the second direction), and cover the line-shaped protrusions 401b.

Similarly, in FIG. 2B, the length of the line-shaped protrusions 402 (402a, 402b, 402c) in the second direction increases toward a protrusion located on the outer circumferential side. As a result, the line-shaped protrusions 402c overlap, in the circumferential direction, at least some of the line-shaped protrusions 402a that are provided on the same separator, belong to the same radial row, and are positioned closer to the inner circumferential side (preferably 50% or more of the length of the line-shaped protrusions 402a in the second direction), and cover the line-shaped protrusions 402a. The line-shaped protrusions 402a overlap, in the circumferential direction, at least some of the line-shaped protrusions 402b that are provided on the same separator, belong to the same radial row, and are positioned closer to the inner circumferential side (alternatively, preferably 50% or more of the length of the line-shaped protrusions 402b in the second direction), and cover the line-shaped protrusions 402b.

For each of the line-shaped protrusions 401 (401a, 401b, 401c) and the line-shaped protrusions 402 (402a, 402b, 402c), a straight line that passes through the center of the protrusion in the second direction and extends in the radial direction passes through the other protrusions belonging to the same radial row. In the example shown in FIGS. 2A and 2B, as for all of the protrusions belonging to the same radial row, the straight lines that pass through the centers of the protrusions in the second direction and extend in the radial direction coincide with each other.

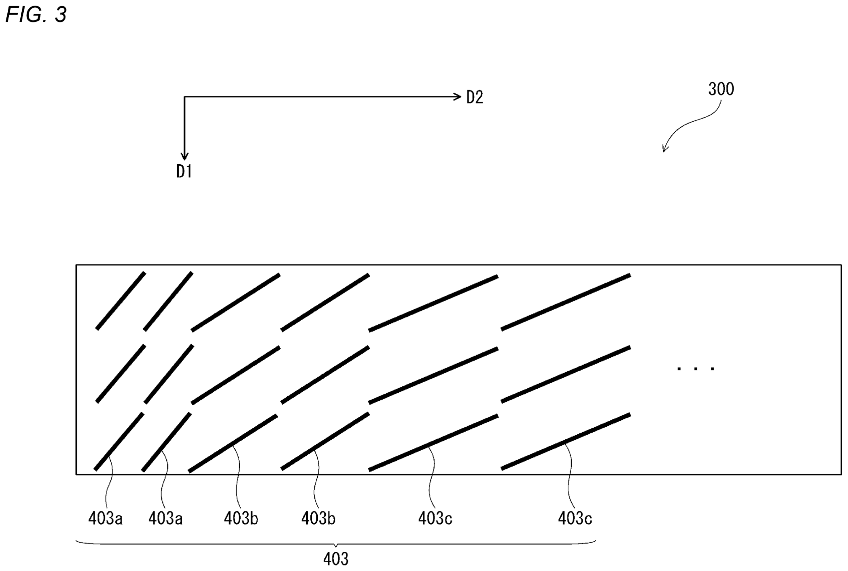

FIG. 3 is a plan view schematically showing another example of the arrangement of the spacer layers provided on the surfaces of the separators. In FIG. 3, a spacer layer 400 has a plurality of line-shaped protrusions 403 (403a, 403b, 403c) that extend obliquely in a direction that is not orthogonal to the first direction or the second direction D2. The line-shaped protrusions 403 (403a, 403b, 403c) have the same width in the first direction D1, but the width in the second direction D2 increases toward a protrusion positioned on the outer circumferential side of a turn, and the width increases in the order of the protrusions 403c, 403b, and 403a. Therefore, the extending direction of the line-shaped protrusions is inclined to approach parallel to the second direction D2 toward the outer circumferential side of a turn.

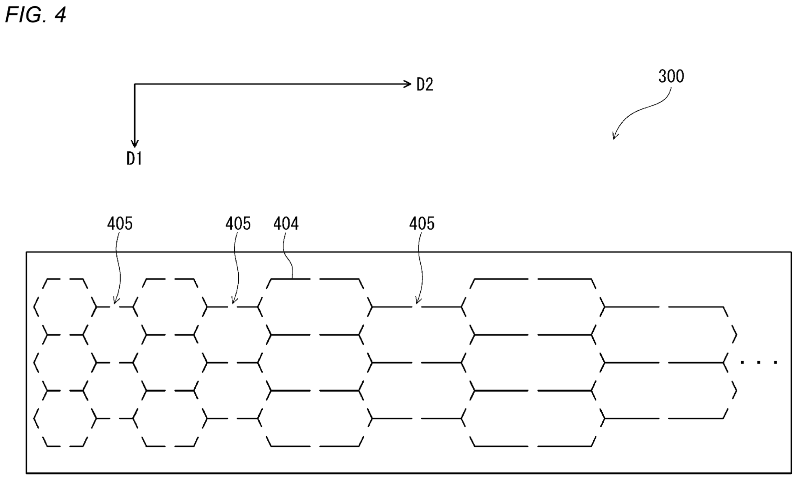

FIG. 4 is a plan view schematically showing still another example of the arrangement of the spacer layer provided on the surface of the separator, in which the spacer layer 400 has hexagonal mesh-like protrusions 404. The mesh-like protrusions 404 may have cutouts 405 for facilitating circulation of the electrolyte solution. The mesh-like protrusions 404 have a pattern in which the hexagons constituting the mesh are stretched in the second direction D2 toward the outer circumferential side of a turn.

Constituent elements of the lithium secondary battery will be described below in more detail.

[Negative Electrode]

The negative electrode includes a negative electrode current collector. In the lithium secondary battery, lithium metal is deposited on the surface of the negative electrode current collector due to charging. More specifically, lithium ions contained in the non-aqueous electrolyte receive electrons on the negative electrode current collector due to charging and become lithium metal, which is then deposited on the surface of the negative electrode current collector. The lithium metal deposited on the surface of the negative electrode current collector dissolves into the non-aqueous electrolyte as lithium ions due to discharging. Note that the lithium ions contained in the non-aqueous electrolyte may be lithium ions derived from a lithium salt added to the non-aqueous electrolyte, may be lithium ions supplied from the positive electrode active material by charging, or may be both types of lithium ions.

The negative electrode current collector is only required to be a conductive sheet. The conductive sheet may be a foil, a film, or the like.

The surface of the conductive sheet may be smooth. This makes it easier for lithium metal from the positive electrode to be deposited evenly on the conductive sheet during charging. "Smooth" means that the conductive sheet has a maximum height roughness Rz of 20 $\mu$m or less. The conductive sheet may have a maximum height roughness Rz of 10 $\mu$m or less. The maximum height roughness Rz is measured in accordance with JIS B 0601:2013.

The material of the negative electrode current collector (conductive sheet) may be any conductive material other than lithium metal and lithium alloy. The conductive material may be a metal material such as a metal or an alloy. The conductive material is preferably a material that does not react with lithium. More specifically, a material that does not form any alloy or intermetallic compound with lithium is preferable. Examples of such conductive materials include copper (Cu), nickel (Ni), iron (Fe), and alloys containing these metal elements, as well as graphite with the basal plane preferentially exposed. Examples of the alloy include copper alloy and stainless steel (SUS). Copper and/or copper alloy are preferable because of their high electrical conductivity.

The thickness of the negative electrode current collector is not particularly limited, and for example, is 5 $\mu$m or more and 300 $\mu$m or less.

A negative electrode mixture layer (not shown) may be formed on the surface of the negative electrode current collector. The negative electrode mixture layer is formed, for example, by applying a paste containing a negative electrode active material such as graphite to at least a portion of the surface of the negative electrode current collector. However, from the viewpoint of achieving a lithium secondary battery with a high capacity exceeding that of a lithium ion battery, the thickness of the negative electrode mixture layer is set to be sufficiently thin such that lithium metal can be deposited on the negative electrode. In this case, the open circuit potential of the negative electrode in the fully charged state may be 70 mV or less with respect to lithium metal (dissolution/deposition potential of lithium). When the open circuit potential of the negative electrode in the fully charged state may be 70 mV or less with respect to lithium metal, lithium metal is present on the surface of a lithium ion absorbing layer in the fully charged state. That is, the negative electrode develops capacity through deposition and dissolution of lithium metal.

[Positive Electrode]

The positive electrode includes, for example, a positive electrode current collector and a positive electrode mixture layer supported by the positive electrode current collector. The positive electrode mixture layer includes, for example, a positive electrode active material, a conductive material, and a binder. The positive electrode mixture layer may be formed on only one surface of the positive electrode current collector, or on both surfaces. The positive electrode is obtained, for example, by applying a positive electrode mixture slurry containing a positive electrode active material, a conductive material, and a binder to both sides of a positive electrode current collector, drying the coating film, and then performing rolling.

The positive electrode active material is a material that absorbs and releases lithium ions. Examples of the positive electrode active material include lithium-containing transition metal oxides, transition metal fluorides, polyanions, fluorinated polyanions, and transition metal sulfides. Among these, lithium-containing transition metal oxides are preferred because they have low production costs and high average discharge voltages.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain one type of transition metal element or two or more types of transition metal elements. The transition metal element may be Co, Ni, and/or Mn. The lithium-containing transition metal oxide may contain one or more main group elements as necessary. Examples of the main group elements include Mg, Al, Ca, Zn, Ga, Ge, Sn, Sb, Pb, and Bi. The main group element may be Al or the like.

Among the lithium-containing transition metal oxides, composite oxides that contain Co, Ni, and/or Mn as transition metal elements, contain Al as an optional component in some cases, and have a layered rock-salt crystal structure are preferable in terms of obtaining high capacity. In this case, in the lithium secondary battery, the mole ratio $mLi/mM$ of the total amount $mLi$ of lithium in the positive electrode and the negative electrode to the amount $mM$ of a metal M other than lithium in the positive electrode is set to, for example, 1.1 or less.

The conductive material is, for example, a carbon material. Examples of the carbon material include carbon black, acetylene black, ketjen black, carbon nanotubes, and graphite.

Examples of the binder include fluororesin, polyacrylonitrile, polyimide resin, acrylic resin, polyolefin resin, and rubber-like polymer. Examples of the fluororesin include polytetrafluoroethylene and polyvinylidene fluoride.

The positive electrode current collector is only required to be a conductive sheet. The conductive sheet may be a foil, a film, or the like. The surface of the positive electrode current collector may be coated with a carbon material.

Examples of the material for the positive electrode current collector (conductive sheet) include metal materials containing Al, Ti, Fe, and the like. The metal material may be Al, an Al alloy, Ti, a Ti alloy, an Fe alloy, or the like. The Fe alloy may be stainless steel (SUS).

The thickness of the positive electrode current collector is not particularly limited, and for example, is 5 $\mu$m or more and 300 $\mu$m or less.

[Separator]

The separator is made of a porous sheet having ion permeability and insulating properties. Examples of the porous sheet include a thin film having micropores, a woven fabric, and a nonwoven fabric. The material of the separator is not particularly limited, but may be a polymer material. Examples of the polymer material include olefin resin, polyamide resin, cellulose, and the like. Examples of the olefin resin include polyethylene, polypropylene, and copolymers of ethylene and propylene. The separator may also contain additives as necessary. Examples of the additives include inorganic fillers.

[Non-Aqueous Electrolyte]

The non-aqueous electrolyte having lithium-ion conductivity contains, for example, a non-aqueous solvent, and lithium ions and anions dissolved in the non-aqueous solvent. The non-aqueous electrolyte may be in a liquid state or a gel state.

The liquid non-aqueous electrolyte is prepared by dissolving a lithium salt in a non-aqueous solvent. When the lithium salt is dissolved in the non-aqueous solvent, lithium ions and anions are generated.

The gel non-aqueous electrolyte contains a lithium salt and a matrix polymer, or a lithium salt, a non-aqueous solvent, and a matrix polymer. As the matrix polymer, for example, a polymer material that gels by absorbing a non-aqueous solvent is used. Examples of the polymer material include fluororesin, acrylic resin, and polyether resin.

As the lithium salt or anion, any known material used in the non-aqueous electrolyte of a lithium secondary battery can be used. Specifically, $BF_4^-$, $ClO_4^-$, $PF_6^-$, $CF_3SO_3^-$, $CF_3CO_2^-$, anions of imides, anions of oxalate complexes, and the like can be mentioned as examples. Examples of anions of imides include $N(SO_2CF_3)_2^-$, and $N(C_mF_{2m+1}SO_2)_x(C_nF_{2n+1}SO_2)_y^-$ (where m and n are each independently an integer of 0 or 1 or more, and x and y are each independently 0, 1, or 2, and x + y = 2 is satisfied). The anion of the oxalate complex may also contain boron and/or phosphorus. The anions of the oxalate complexes include bisoxalate borate anions, $BF_2(C_2O_4)^-$, $PF_4(C_2O_4)^-$, $PF_2(C_2O_4)_2^-$ and the like. The non-aqueous electrolyte may contain one of these anions alone or two or more of them.

From the viewpoint of suppressing dendritic deposition of the lithium metal, the non-aqueous electrolyte preferably contains at least an anion of an oxalate complex. The interaction between the anion of the oxalate complex and lithium facilitates uniform deposition of the lithium metal in the form of fine particles. This makes it easier to suppress localized deposition of the lithium metal. The anions of the oxalate complex may be combined with other anions. The other anions may be $PF_6^-$ and/or the anions of an imide.

Examples of the non-aqueous solvent include esters, ethers, nitriles, amides, and halogen-substituted compounds of these. The non-aqueous electrolyte may contain one of these non-aqueous solvents alone or two or more of them. Examples of the halogen-substituted compounds include fluorides.

Examples of the esters include carbonate esters and carboxylate esters. Examples of cyclic carbonate esters include ethylene carbonate, propylene carbonate, and fluoroethylene carbonate (FEC). Examples of chain carbonate esters include dimethyl carbonate (DMC), ethyl methyl carbonate (EMC), and diethyl carbonate. Examples of cyclic carboxylates include γ-butyrolactone and γ-valerolactone. Examples of chain carboxylates include ethyl acetate, methyl propionate, and methyl fluoropropionate.

Ethers include cyclic ethers and chain ethers. Examples of cyclic ethers include 1,3-dioxolane, 4-methyl-1,3-dioxolane, tetrahydrofuran, and 2-methyltetrahydrofuran. Examples of chain ethers include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The concentration of the lithium salt in the non-aqueous electrolyte is, for example, 0.5 mol/L or more and 3.5 mol/L or less. The concentration of the anions in the non-aqueous electrolyte may be 0.5 mol/L or more and 3.5 mol/L or less. The concentration of the anions of the oxalate complex in the non-aqueous electrolyte may be 0.05 mol/L or more and 1 mol/L or less.

The non-aqueous electrolyte may contain an additive. The additive may form a coating on the negative electrode. The formation of the coating derived from the additive on the negative electrode makes it easier to suppress the generation of dendrites. Examples of such additives include vinylene carbonate, FEC, vinyl ethyl carbonate (VEC), and the like.

Hereinafter, a configuration of the lithium secondary battery according to the present disclosure will be described with reference to the drawings, using a cylindrical battery having a rolled-up type electrode group as an example. However, the present disclosure is not limited to the following configuration.

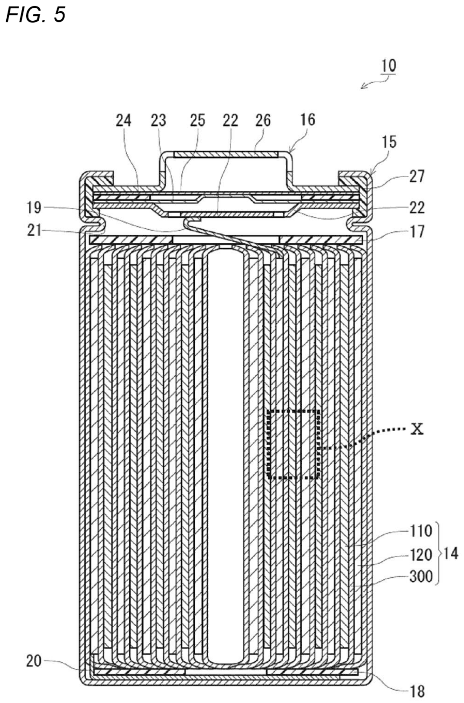

FIG. 5 is a vertical cross-sectional view of a lithium secondary battery 10. The lithium secondary battery 10 is a cylindrical battery that includes a cylindrical battery case, and a rolled-up type electrode group 14 and non-aqueous electrolyte (not shown) accommodated in the battery case. The battery case is constituted by a case body 15, which is a bottomed cylindrical metal container, and a sealing body 16 that seals the opening of the case body 15. The case body 15 has an annular step portion 21 formed by pressing a part of the side wall from the outside near the opening. The sealing body 16 is supported by the surface on the opening side of the step portion 21. A gasket 27 is disposed between the case body 15 and the sealing body 16, thereby ensuring the airtightness of the battery case. Insulating plates 17 and 18 are arranged inside the case body 15 on both ends in the rolling-up axis direction of the electrode group 14.

The sealing body 16 includes a filter 22, a lower valve body 23, an insulating member 24, an upper valve body 25, and a cap 26. The cap 26 is disposed outside the case body 15, and the filter 22 is disposed inside the case body 15. The lower valve body 23 and the upper valve body 25 are connected to each other at their respective central portions, and the insulating member 24 is interposed between their respective peripheral edge portions. The filter 22 and the lower valve body 23 are connected to each other at their respective peripheral edge portions. The upper valve body 25 and the cap 26 are connected to each other at their respective peripheral edge portions. An air hole is formed in the lower valve body 23. When the internal pressure of the battery case increases due to abnormal heat generation or the like, the upper valve body 25 bulges toward the cap 26 and separates from the lower valve body 23. As a result, the electrical connection between the lower valve body 23 and the upper valve body 25 is cut off. When the internal pressure increases further, the upper valve body 25 breaks, and gas is discharged from an opening formed in the cap 26.

The electrode group 14 is constituted by a positive electrode 110, a negative electrode (negative electrode current collector) 120, and a separator 300. The positive electrode 110, the negative electrode 120, and the separator 300 interposed between the positive electrode 110 and the negative electrode 120 are all band-shaped, and are spirally rolled up such that the width directions thereof are parallel to the rolling-up axis.

The positive electrode 110 is electrically connected via a positive electrode lead 19 to the cap 26, which also serves as a positive electrode terminal. One end of the positive electrode lead 19 is connected to, for example, a vicinity of the center of the positive electrode 110 in the longitudinal direction. The other end of the positive electrode lead 19 that extends from the positive electrode 110 passes through a through hole formed in the insulating plate 17 and is welded to an inner surface of the filter 22.

The negative electrode 120 is electrically connected via a negative electrode lead 20 to the case body 15, which serves as a negative electrode terminal. One end of the negative electrode lead 20 is connected to, for example, an end of the negative electrode 120 in the longitudinal direction, and the other end is welded to an inner bottom surface of the case body 15.

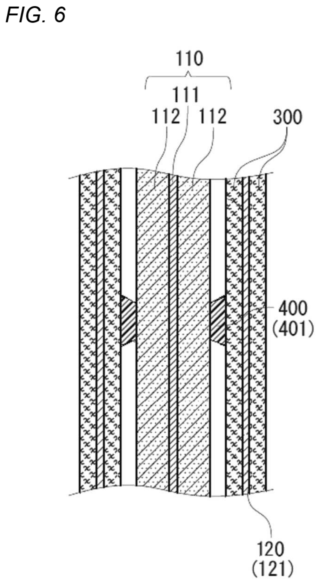

FIG. 6 is an enlarged view schematically showing a discharged state in a region X surrounded by dashed lines in FIG. 5. In the illustrated example, the cross-sectional shape of the spacer is trapezoidal. However, embodiments of the present disclosure are not limited to this. In the illustrated example, the spacer layer is provided between the positive electrode and the separator. However, embodiments of the present disclosure are not limited to this, and the spacer layers may be provided between the negative electrode and the separator, or between the positive electrode and the separator and between the negative electrode and the separator.

The positive electrode 110 includes a positive electrode current collector 111 and a positive electrode mixture layer 112. The spacer layer 400 is provided between the positive electrode mixture layer 112 and the separator 300. The spacer layer 400 is constituted by line-shaped protrusions 401 provided along the second direction D2 (longitudinal direction) of the separator 300. In a discharged state (a), no lithium metal is deposited on the surface of the negative electrode current collector 121, and a space is maintained between the positive electrode 110 and the separator 300. On the other hand, in a charged state, lithium metal is deposited on the surface of the negative electrode current collector 121 and is accommodated in the space between the positive electrode 110 and the separator 300 under a pressing force of the separator 300. That is, the negative electrode 120 includes a negative electrode current collector 121 in a discharged state, and includes the negative electrode current collector 121 and lithium metal deposited on the surface of the negative electrode current collector 121 in a charged state.

Since lithium metal is accommodated in the space between the positive electrode 110 and the separator 300, an apparent change in the volume of the electrode group that accompanies the deposition of lithium metal in charge/-discharge cycles is reduced. Therefore, stress applied to the negative electrode current collector 121 is also suppressed. In addition, since pressure is applied from the separator 300 to the lithium metal accommodated between the positive electrode 110 and the separator 300, a deposition state of the lithium metal is controlled, the lithium metal is less likely to be isolated, and a decrease in charge-discharge efficiency is suppressed.

Although the cylindrical lithium secondary battery having a rolled-up type electrode group has been described in the illustrated example, the shape and the like of the lithium secondary battery are not limited to this , and can be selected as appropriate from various shapes such as a coin shape, a rectangular shape, a sheet shape, and a flat shape in addition to a cylindrical shape, depending on the application or the like. The form of the electrode group is not particularly limited, and may be a stacked type. In addition, as for a configuration of the lithium secondary battery other than the electrode group and the nonaqueous electrolyte, any known configuration may be used without any particular limitation.

(Supplementary Notes)

The above description of the embodiments discloses the following technologies.

(Technology 1)

A lithium secondary battery including: a positive electrode; a negative electrode facing the positive electrode; a separator disposed between the positive electrode and the negative electrode; and a non-aqueous electrolyte,

wherein an electrode group having a plurality of circumferences is constructed by rolling up the positive electrode and the negative electrode with the separator interposed between the positive electrode and the negative electrode,
the positive electrode, the negative electrode, and the separator have an elongate shape with a length L1 in a first direction D1 parallel to a rolling-up axis and a length L2 in a second direction D2 perpendicular to the first direction (L1 < L2),
at the negative electrode, lithium metal is deposited during charging and the lithium metal dissolves during discharging,
at least one member selected from the group consisting of the positive electrode, the negative electrode, and the separator has a spacer layer,

the spacer layer is constituted by a plurality of protrusions such that the spacer layer is not continuous in both the first direction and the second direction, and

the plurality of protrusions are divided into a plurality of groups, and the protrusions included in each group are aligned in a radial direction to form a plurality of radially arranged rows, when the electrode group is viewed from a direction of the rolling-up axis.

(Technology 2)

The lithium secondary battery according to Technology 1, wherein a width of the given protrusion in the second direction is smaller than or equal to a width of the protrusion in the second direction disposed closer to an outer circumferential side.

(Technology 3)

The lithium secondary battery according to Technology 2, wherein the width of the given protrusion in the second direction gradually increases from an inner circumferential side toward the outer circumferential side.

(Technology 4)

The lithium secondary battery according to Technology 3, wherein, when a diameter of the given circumference is denoted by D and a total thickness of the positive electrode, the negative electrode, the separator, and the spacer layer is denoted by T, a length Li of the given protrusion in the second direction on the given circumference and a length Lo of the protrusion in the second direction on the circumference that is adjacent to the given circumference and is closer to the outer circumferential side satisfy

$$Lo = Li \times (D + 2T)/D.$$

(Technology 5)

The lithium secondary battery according to any one of Technologies 1 to 4, wherein, when the electrode group is viewed from the direction of the rolling-up axis, protrusions that are included in the same group and are present on adjacent circumferences overlap each other by 50% or more in length in the second direction.

(Technology 6)

The lithium secondary battery according to Technology 5, wherein, when the electrode group is viewed from the direction of the rolling-up axis, a straight line that passes through a center of the specific protrusion in the second direction and extends in a radial direction passes through all the protrusions included in the same group.

(Technology 7)

The lithium secondary battery according to any one of Technologies 1 to 6, wherein, on a given cross section that is perpendicular to the rolling-up axis of the electrode group and crosses at least one of the protrusions, a proportion of the crossed protrusions present on the given cross section is substantially equal to that on all of the circumferences.

(Technology 8)

The lithium secondary battery according to any one of Technologies 1 to 7, wherein, when a virtual line parallel to the first direction is drawn at a given position of the member, the virtual line passes through the spacer layer at two or more points.

(Technology 9)

The lithium secondary battery according to any one of Technologies 1 to 8, wherein, on a given cross section that is perpendicular to the rolling-up axis of the electrode group and crosses at least one of the protrusions, there are two or more regions where no protrusions are present.

(Technology 10)

The lithium secondary battery according to any one of Technologies 1 to 9, wherein, when a virtual line is drawn from a point on the given protrusion along the second direction, a length Ly by which the virtual line crosses the protrusions and a length Ln by which the virtual line does not cross the protrusions satisfies

$$0.1 \leq Ln/(Ly + Ln) \leq 0.75.$$

(Technology 11)

The lithium secondary battery according to any one of Technologies 1 to 10, wherein the plurality of protrusions are all line-shaped protrusions parallel to the second direction.

(Technology 12)

The lithium secondary battery according to any one of Technologies 1 to 11, wherein the plurality of protrusions are arranged in a staggered manner.

(Technology 13)

A separator having an elongate shape having a length L1 in a first direction D1 and a length L2 in a second direction D2 perpendicular to the first direction (L1 < L2), the separator including:

a base material layer; and
a spacer layer,
wherein the spacer layer is constituted by a plurality of protrusions such that the spacer layer is not continuous in both the first direction and the second direction, and
when an electrode group having a plurality of circumferences and a rolling-up axis parallel to the first direction is constructed by rolling up a positive electrode and a negative electrode with the separator interposed between the positive electrode and the negative electrode,
the plurality of protrusions are divided into a plurality of groups, and the protrusions included in each group are aligned in a radial direction to form a plurality of radially arranged rows, when the electrode group is viewed from a direction of the rolling-up axis.

[Working Example]

The lithium secondary battery according to the present disclosure will be specifically described below based on working examples and comparative examples. The present disclosure is not limited to the following working examples.

<Working Example 1>

(1) Preparation of Positive Electrode

A lithium-containing transition metal oxide (NCA; positive electrode active material) containing Li, Ni, Co, and Al (a mole ratio of Li to a total of Ni, Co, and Al is 1.0) and having a layered rock-salt crystal structure, acetylene black (AB; conductive material), and polyvinylidene fluoride (PVdF; binder) were mixed with a mass ratio of NCA : AB : PVdF = 95 : 2.5 : 2.5, and an appropriate amount of N-methyl-2-pyrrolidone (NMP) were added and stirred to prepare a positive electrode mixture slurry. Next, the obtained positive electrode mixture slurry was applied onto both sides of an Al foil (positive electrode current collector) and then dried, and a coating film of the positive electrode mixture was rolled using a roller. Finally, the resulting stacked body of the positive electrode current collector and the positive electrode mixture was cut to a predetermined electrode size to prepare a positive electrode having positive electrode mixture layers on both surfaces of the positive electrode current collector.

(2) Formation of Spacer

A polyethylene separator (microporous film) was prepared. Polyimide ink was applied to a predetermined region of the surface of the separator, and then dried with hot air to provide a spacer layer made of polyimide resin (Young's modulus of 2 GPa). The polyimide ink was applied using a dispenser. The spacer layer was formed in a pattern similar to that in FIG. 1, in which line-shaped protrusions were formed intermittently along six straight lines parallel to the second direction D2. Intervals between the six straight lines parallel to the second direction D2 in the first direction D1 were each 5 mm. The width of each protrusion (the width in a direction perpendicular to the extending direction of the protrusion) was 1 mm. The protrusion had a height h of 50 $\mu$m.

The length of the line-shaped protrusions (extension length in the direction in which the protrusions extend) and their arrangement intervals in the second direction (center-to-center distance) were set such that the length and arrangement intervals of the line-shaped protrusions located on a circumference closer to the outer circumferential side increased such that the above-described relational expression Lo = Li $\times$ (D + 2T)/D was satisfied.

The length of the line-shaped protrusions (extension length in the direction in which the protrusions extend) were set to 1/4 of the circumferential length of a circumference where the line-shaped protrusions were present, and two line-shaped protrusions were arranged on the same circumference. In addition, when a virtual line is drawn from a point on a given line-shaped protrusion along the second direction D2, the length by which the virtual line crosses the protrusions is Ly, and the length by which the virtual line does not cross the protrusions is Ln, Ln/(Ly + Ln) = 0.5 holds true.

(3) Preparation of Negative Electrode

A rectangular electrolytic copper foil (with a thickness of 12 $\mu$m) was prepared as a negative electrode current collector.

(4) Preparation of Non-Aqueous Electrolyte

Ethylene carbonate (EC) and dimethyl carbonate (DMC) were mixed in a volume ratio of EC : DMC = 30 : 70, and LiPF$_6$ and LiBF$_2$(C$_2$O$_4$) were dissolved in the resulting mixed solvent at concentrations of 1 mol/L and 0.1 mol/L, respectively, to prepare a liquid nonaqueous electrolyte.

(5) Assembly of Battery

In an inert gas atmosphere, the positive electrode and the negative electrode current collector were spirally rolled up with the separators interposed therebetween to prepare an electrode group. Since all of the lithium contained in the electrode group originates from the positive electrode, the mole ratio mLi/mM of the total amount mLi of lithium contained in the positive electrode and the negative electrode to the amount mM of metals M (here, Ni, Co, and Al) contained in the positive electrode was 1.0.

The electrode group was accommodated in a bag-shaped exterior body made of a laminate sheet having an Al layer, the above-described non-aqueous electrolyte was injected, and then the exterior body was sealed to complete a lithium secondary battery A1.

<Working Example 2>

In the formation of the spacers in (2) above, the arrangement pattern of the spacer layer was formed in the same manner as in Example 1, in which line-shaped protrusions were formed intermittently along six straight lines parallel to the second direction D2. Intervals between the six straight lines parallel to the second direction D2 in the first direction D1 were each 5 mm.

The length of the line-shaped protrusions (extension length in the direction in which the protrusions extend) and their arrangement intervals in the second direction (center-to-center distance) were set such that the length and arrangement intervals of the line-shaped protrusions located on a circumference closer to the outer circumferential side increased such that the above-described relational expression Lo = Li $\times$ (D + 2T)/D was satisfied.

The length of the line-shaped protrusions (extension length in the direction in which the protrusions extend) were set to 1/8 of the circumferential length of a circumference where the line-shaped protrusions were present, and two line-shaped protrusions were arranged on the same circumference. The line-shaped protrusions were arranged along four adjacent straight lines parallel to the second direction D2 such that the line-shaped protrusions did not overlap in the first direction. In addition, when a virtual line is drawn from a point on a given line-shaped protrusion along the second direction D2, the length by which the virtual line crosses the protrusions is Ly, and the length by which the virtual line does not cross the protrusions is Ln, Ln/(Ly + Ln) = 0.75 holds true.

A lithium secondary battery A2 was completed, with the rest of the process was the same as in Working Example 1.

<Working Example 3>

In the formation of the spacers in (2) above, the arrangement pattern of the spacer layer was the same as in Example 1, in which line-shaped protrusions were formed intermittently along six straight lines parallel to the second direction D2, but the length of the line-shaped protrusions (extension length in the direction in which the protrusions extend) was changed from that in Working Example 1.

The length of the line-shaped protrusions (extension length in the direction in which the protrusions extend) was 1/10 of the circumferential length of a circumference where the line-shaped protrusions were present, and nine line-shaped protrusions were arranged on the same circumference. In addition, when a virtual line is drawn from a point on a given line-shaped protrusion along the second direction D2, the length by which the virtual line crosses the protrusions is Ly, and the length by which the virtual line does not cross the protrusions is Ln, Ln/(Ly + Ln) = 0.1 holds true.

A lithium secondary battery A3 was completed, with the rest of the process was the same as in Working Example 1.

<Comparative Example 1>

In the formation of the spacers in (2) above, the arrangement pattern of the spacer layer was a pattern in which the line-shaped protrusions were formed continuously along six straight lines parallel to the second direction D2, at the center and both ends of the separator in the first direction. Therefore, when a virtual line is drawn from a point on a given line-shaped protrusion along the second direction D2, the length by which the virtual line crosses the protrusions is Ly, and the length by which the virtual line does not cross the protrusions is Ln, Ln = 0 holds true, and thus Ln/(Ly + Ln) = 0 holds true.

A lithium secondary battery B1 was completed in the same manner as in Working Example 1, except for the process other than this.

<Comparative Example 2>

In the formation of the spacers in (2) above, the arrangement pattern of the spacer layer was a pattern in which the line-shaped protrusions were formed intermittently along six straight lines parallel to the second direction D2 in the same manner as in Working Example 1. On the other hand, the length of the line-shaped protrusions (extension length in the direction in which the protrusions extend) and arrangement intervals (center-to-center distance) in the second direction were constant, regardless of the circumference on which the line-shaped protrusions were present.

The length of the line-shaped protrusions (extension length in the direction in which the protrusions extend) was 10 mm regardless of the circumferential length of a circumference where the line-shaped protrusions were present, and arrangement intervals of the line-shaped protrusions (center-to-center distance) in the second direction were the same as the length of the line-shaped protrusions. In addition, when a virtual line is drawn from a point on a given line-shaped protrusion along the second direction D2, the length by which the virtual line crosses the protrusions is Ly, and the length by which the virtual line does not cross the protrusions is Ln, Ln/(Ly + Ln) = 0.5 holds true.

A lithium secondary battery B2 was completed, with the rest of the process was the same as in Working Example 1.

[Evaluation 1]

A charging/discharging test was performed on each of the obtained batteries. In the charging/discharging test, the battery was charged under the following conditions in a thermostatic chamber at 25°C, then was allowed to rest for 20 minutes and was discharged under the following conditions.

The battery was charged with a constant current of 10 mA per unit area (1 cm$^2$) of the electrode until the battery voltage reached 4.3 V, and then was charged with a constant voltage of 4.3 V until the current value per unit area of the electrode reached 1 mA.

(Discharging)

The battery was discharged with a constant current of 10 mA per unit area of the electrode until the battery voltage reached 3.0 V.

With the above charging and discharging constituting one cycle, the charge/discharge cycle was repeated. A ratio (%) of the discharge capacity at 50th cycle to the discharge capacity at the 1st cycle was calculated as the capacity retention rate.

In addition, the number of cycles was determined when the cycle ended, which was presumably caused by a crack in the negative electrode current collector due to expansion of the negative electrode. Evaluation results are shown in Table 1.

[Table 1]

| Battery | Protrusion Pattern | Increase Rate of Protrusion Length Lo/Li | Ln/(Ly+Ln) | Number of Cycles Ended | Capacity Retention Rate (%) |
|---|---|---|---|---|---|
| A1 | Line-shaped | (D+2T) /D | 0.5 | 200 | 95 |
| A2 | Line-shaped | (D+2T) /D | 0.75 | 170 | 98 |
| A3 | Line-shaped | (D+2T) /D | 0.1 | 225 | 93 |
| B1 | Line-shaped | - | 0 | 230 | 60 |
| B2 | Line-shaped | 1 | 0.5 | 50 | 95 |

The number of cycles until the cycle ended in the batteries A1 to A3 was greater than that in the batteries B1 and B2, and the capacity retention rates of the batteries A1 to A3 were also higher than those in the batteries B1 and B2. On the other hand, although the battery B1 could perform a larger number of cycles until the cycle ended, the capacity retention rate was lower. Although the battery B2 had a capacity retention rate equivalent to that of the batteries A1 to A3, the battery B2 could perform a smaller number of cycles until the cycle ended.

[Industrial Applicability]

The lithium secondary battery according to the present disclosure can be used in electronic devices such as mobile phones, smartphones, and tablet terminals, electric vehicles including hybrids and plug-in hybrids, home storage batteries combined with solar cells, and the like.

Although the present invention has been described in terms of the presently preferred embodiments, such disclosure is not to be interpreted as limiting. Various modifications and variations will no doubt become apparent to those skilled in the art to which this invention pertains upon reading the above disclosure. It is therefore intended that the appended claims be interpreted to cover all such variations and modifications as do not depart from the true spirit and scope of the invention.

[Reference Signs List]

10: lithium secondary battery, 14: electrode group, 15: case body, 16: sealing body, 17, 18: insulating plate, 19: positive electrode lead, 20: negative electrode lead, 21: step portion, 22: filter, 23: lower valve body, 24: insulating member, 25: upper valve body, 26: cap, 27: gasket, 100: electrode, 110: positive electrode, 111: positive electrode current collector, 112: positive electrode mixture layer, 120: negative electrode, 121: negative electrode current collector, 300: separator, 400: spacer layer, 401, 401a, 401b, 401c, 402, 402a, 402b, 402c, 403, 403a, 403b, 403c: line-shaped protrusions, 404: mesh-like protrusion, 405: cutout

**Claims**

1. A lithium secondary battery comprising:

   a positive electrode;
   a negative electrode facing the positive electrode;
   a separator disposed between the positive electrode and the negative electrode; and
   a non-aqueous electrolyte,
   wherein an electrode group having a plurality of circumferences is constructed by rolling up the positive electrode and the negative electrode with the separator interposed between the positive electrode and the negative electrode,
   the positive electrode, the negative electrode, and the separator have an elongate shape having a length L1 in a first direction D1 parallel to a rolling-up axis and a length L2 in a second direction D2 perpendicular to the first direction (L1 < L2),
   at the negative electrode, lithium metal is deposited during charging and the lithium metal dissolves during discharging,
   at least one member selected from the group consisting of the positive electrode, the negative electrode, and the separator has a spacer layer,
the spacer layer is constituted by a plurality of protrusions such that the spacer layer is not continuous in both the first direction and the second direction, and
the plurality of protrusions are divided into a plurality of groups, and the protrusions included in each group are aligned in a radial direction to form a plurality of radially arranged rows, when the electrode group is viewed from a direction of the rolling-up axis.

2. The lithium secondary battery according to claim 1,
wherein a width of the given protrusion in the second direction is smaller than or equal to a width of the protrusion in the second direction disposed closer to an outer circumferential side.

3. The lithium secondary battery according to claim 2,
wherein the width of the given protrusion in the second direction gradually increases from an inner circumferential side to the outer circumferential side.

4. The lithium secondary battery according to claim 3,
wherein, when a diameter of the given circumference is denoted by D and a total thickness of the positive electrode, the negative electrode, the separator, and the spacer layer is denoted by T, a length Li of the given protrusion in the second direction on the given circumference and a length Lo of the protrusion in the second direction on the circumference that is adjacent to the given circumference and is closer to the outer circumferential side satisfy

$$Lo = Li \times (D + 2T)/D.$$

5. The lithium secondary battery according to any one of claims 1 to 4,
wherein, when the electrode group is viewed from the direction of the rolling-up axis, protrusions that are included in the same group and are present on adjacent circumferences overlap each other by 50% or more in length in the second direction.

6. The lithium secondary battery according to claim 5,
wherein, when the electrode group is viewed from the direction of the rolling-up axis, a straight line that passes through a center of the specific protrusion in the second direction and extends in a radial direction passes through all the protrusions included in the same group.

7. The lithium secondary battery according to any one of claims 1 to 4,
wherein, on a given cross section that is perpendicular to the rolling-up axis of the electrode group and crosses at least one of the protrusions, a proportion of the crossed protrusions present on the given cross section is substantially equal to that on all of the circumferences.

8. The lithium secondary battery according to any one of claims 1 to 4,
wherein, when a virtual line parallel to the first direction is drawn at a given position of the member, the virtual line passes through the spacer layer at two or more points.

9. The lithium secondary battery according to any one of claims 1 to 4,
wherein, on a given cross section that is perpendicular to the rolling-up axis of the electrode group and crosses at least one of the protrusions, there are two or more regions where no protrusions are present.

10. The lithium secondary battery according to any one of claims 1 to 4,
wherein, when a virtual line is drawn from a point on the given protrusion along the second direction, a length Ly by which the virtual line crosses the protrusions and a length Ln by which the virtual line does not cross the protrusions satisfies

$$0.1 \leq Ln/(Ly + Ln) \leq 0.75.$$

11. The lithium secondary battery according to any one of claims 1 to 4,
wherein the plurality of protrusions are all line-shaped protrusions parallel to the second direction.

12. The lithium secondary battery according to any one of claims 1 to 4,
   wherein the plurality of protrusions are arranged in a staggered manner.

13. A separator having an elongate shape having a length L1 in a first direction D1 and a length L2 in a second direction D2 perpendicular to the first direction (L1 < L2),
   the separator comprising:

   a base material layer; and
   a spacer layer,
   wherein the spacer layer is constituted by a plurality of protrusions such that the spacer layer is not continuous in both the first direction and the second direction, and
   when an electrode group having a plurality of circumferences and a rolling-up axis parallel to the first direction is constructed by rolling up a positive electrode and a negative electrode with the separator interposed between the positive electrode and the negative electrode,
   the plurality of protrusions are divided into a plurality of groups, and the protrusions included in each group are aligned in a radial direction to form a plurality of radially arranged rows, when the electrode group is viewed from a direction of the rolling-up axis.

FIG. 1

FIG. 2A

FIG. 2B

EP 4 645 510 A1

FIG. 3

FIG. 4

FIG. 5

FIG. 6

# EP 4 645 510 A1

## INTERNATIONAL SEARCH REPORT

| | International application No. |
|---|---|
| | **PCT/JP2023/045078** |

### A. CLASSIFICATION OF SUBJECT MATTER

*H01M 10/0587*(2010.01)i; *H01M 4/134*(2010.01)i; *H01M 4/38*(2006.01)i; *H01M 10/052*(2010.01)i; *H01M 50/449*(2021.01)i; *H01M 50/463*(2021.01)i
FI: H01M10/0587; H01M4/134; H01M4/38 Z; H01M50/449; H01M50/463 B; H01M10/052

According to International Patent Classification (IPC) or to both national classification and IPC

### B. FIELDS SEARCHED

Minimum documentation searched (classification system followed by classification symbols)

H01M10/0587; H01M4/134; H01M4/38; H01M10/052; H01M50/449; H01M50/463

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2022/209601 A1 (PANASONIC INTELLECTUAL PROPERTY MANAGEMENT CO., LTD.) 06 October 2022 (2022-10-06) entire text, all drawings | 1-13 |
| A | WO 2022/045127 A1 (PANASONIC INTELLECTUAL PROPERTY MANAGEMENT CO., LTD.) 03 March 2022 (2022-03-03) entire text, all drawings | 1-13 |
| A | WO 2021/192645 A1 (PANASONIC INTELLECTUAL PROPERTY MANAGEMENT CO., LTD.) 30 September 2021 (2021-09-30) entire text, all drawings | 1-13 |
| A | JP 2019-160777 A (PANASONIC INTELLECTUAL PROPERTY MANAGEMENT CO., LTD.) 19 September 2019 (2019-09-19) entire text, all drawings | 1-13 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 February 2024** | **27 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

27

## INTERNATIONAL SEARCH REPORT

International application No.

**PCT/JP2023/045078**

### C.   DOCUMENTS CONSIDERED TO BE RELEVANT

| Category* | Citation of document, with indication, where appropriate, of the relevant passages | Relevant to claim No. |
|---|---|---|
| A | JP 2016-184710 A (JM ENERGY CORP.) 20 October 2016 (2016-10-20)<br>entire text, all drawings | 1-13 |

Form PCT/ISA/210 (second sheet) (July 2022)

### INTERNATIONAL SEARCH REPORT
Information on patent family members

International application No.

**PCT/JP2023/045078**

| Patent document cited in search report | | | Publication date (day/month/year) | Patent family member(s) | | | Publication date (day/month/year) |
|---|---|---|---|---|---|---|---|
| WO | 2022/209601 | A1 | 06 October 2022 | CN | 117099240 | A | |
| WO | 2022/045127 | A1 | 03 March 2022 | US | 2023/0361431 | A1 | |
| | | | | entire text, all drawings | | | |
| | | | | EP | 4207413 | A1 | |
| | | | | CN | 115885404 | A | |
| WO | 2021/192645 | A1 | 30 September 2021 | US | 2023/0187785 | A1 | |
| | | | | entire text, all drawings | | | |
| | | | | CN | 115336076 | A | |
| JP | 2019-160777 | A | 19 September 2019 | US | 2019/0280339 | A1 | |
| | | | | entire text, all drawings | | | |
| | | | | EP | 3537522 | A1 | |
| JP | 2016-184710 | A | 20 October 2016 | (Family: none) | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20200066254 A